(19) Europäisches Patentamt
European Patent Office
Office européen des brevets

(11) **EP 1 395 787 B1**

(12) **FASCICULE DE BREVET EUROPEEN**

(45) Date de publication et mention
de la délivrance du brevet:
**04.04.2007 Bulletin 2007/14**

(51) Int Cl.:
**F28F 3/02** *(2006.01)*       **B21D 53/04** *(2006.01)*
**B21D 13/02** *(2006.01)*       **B21D 28/26** *(2006.01)*

(21) Numéro de dépôt: **02738265.4**

(22) Date de dépôt: **17.05.2002**

(86) Numéro de dépôt international:
**PCT/FR2002/001674**

(87) Numéro de publication internationale:
**WO 2002/095315 (28.11.2002 Gazette 2002/48)**

(54) **AILETTE A PERSIENNES POUR ECHANGEUR DE CHALEUR**

GESCHLITZE RIPPE FÜR WÄRMETAUSCHER

LOUVERED FINS FOR HEAT EXCHANGER

(84) Etats contractants désignés:
**DE FR GB**

(30) Priorité: **18.05.2001 FR 0106586**

(43) Date de publication de la demande:
**10.03.2004 Bulletin 2004/11**

(60) Demande divisionnaire:
**06113469.8 / 1 683 590**

(73) Titulaires:
• **L'Air Liquide S. A. à Directoire et Conseil de Surveillance pour l'Etude et l'Exploitation des Procédés Georges Claude**
**75321 Paris Cedex 07 (FR)**
Etats contractants désignés:
**GB**
• **Nordon Cryogenie**
**88194 Golbey Cedex (FR)**
Etats contractants désignés:
**DE FR**

(72) Inventeurs:
• **AVEROUS, David**
**F-88390 Renauvoid (FR)**
• **GRIVEL, Michael**
**F-88000 Epinal (FR)**
• **WAGNER, Marc**
**F-94100 Saint-Maur-des-Fossés (FR)**
• **CHATEL, Fabienne**
**F-92170 Vanves (FR)**
• **FUENTES, François**
**F-78110 Le Vésinet (FR)**
• **SZULMAN, Claire**
**F-92190 Meudon (FR)**

• **WERLEN, Etienne**
**F-75015 Paris (FR)**

(74) Mandataire: **Mercey, Fiona Susan et al**
**L'Air Liquide SA,**
**Département Propriété Intellectuelle,**
**75 quai d'Orsay**
**75321 Paris Cedex 07 (FR)**

(56) Documents cités:
**EP-A- 0 129 272       EP-A- 0 952 419**
**FR-A- 2 270 544       FR-A- 2 495 506**
**GB-A- 745 936       US-A- 3 568 461**
**US-A- 4 469 167       US-A- 4 469 168**
**US-A- 5 035 052       US-A- 5 311 935**
**US-A1- 2001 029 767**

• **PATENT ABSTRACTS OF JAPAN vol. 007, no. 128 (M-220), 3 juin 1983 (1983-06-03) -& JP 58 045495 A (HITACHI SEISAKUSHO KK), 16 mars 1983 (1983-03-16)**
• **PATENT ABSTRACTS OF JAPAN vol. 007, no. 124 (M-218), 28 mai 1983 (1983-05-28) -& JP 58 041637 A (HITACHI SEISAKUSHO KK), 10 mars 1983 (1983-03-10)**
• **PATENT ABSTRACTS OF JAPAN vol. 014, no. 023 (M-920), 17 janvier 1990 (1990-01-17) -& JP 01 263498 A (TOYOTA CENTRAL RES & DEV LAB INC), 19 octobre 1989 (1989-10-19)**
• **PATENT ABSTRACTS OF JAPAN vol. 011, no. 175 (M-596), 5 juin 1987 (1987-06-05) -& JP 62 005098 A (NIPPON DENSO CO LTD), 12 janvier 1987 (1987-01-12)**

- **PATENT ABSTRACTS OF JAPAN vol. 008, no. 224 (M-331), 13 octobre 1984 (1984-10-13) -& JP 59 107190 A (NIPPON RADIATOR KK), 21 juin 1984 (1984-06-21)**

- **PATENT ABSTRACTS OF JAPAN vol. 017, no. 043 (M-1360), 27 janvier 1993 (1993-01-27) -& JP 04 262829 A (NIPPONDENSO CO LTD), 18 septembre 1992 (1992-09-18)**

## Description

La présente invention se rapporte à une ailette ondulée pour échangeur de chaleur à plaques et ailettes.

Il existe différents types d'échangeurs de chaleur à plaques et ailettes, adaptés chacun à un domaine d'utilisation. En particulier, l'invention s'applique de façon avantageuse à un échangeur de chaleur d'une unité de séparation d'air ou de mélanges $H_2$/CO (hydrogène/monoxyde de carbone) par distillation cryogénique.

Cet échangeur peut être une ligne d'échange principale ou un vaporiseur/condenseur.

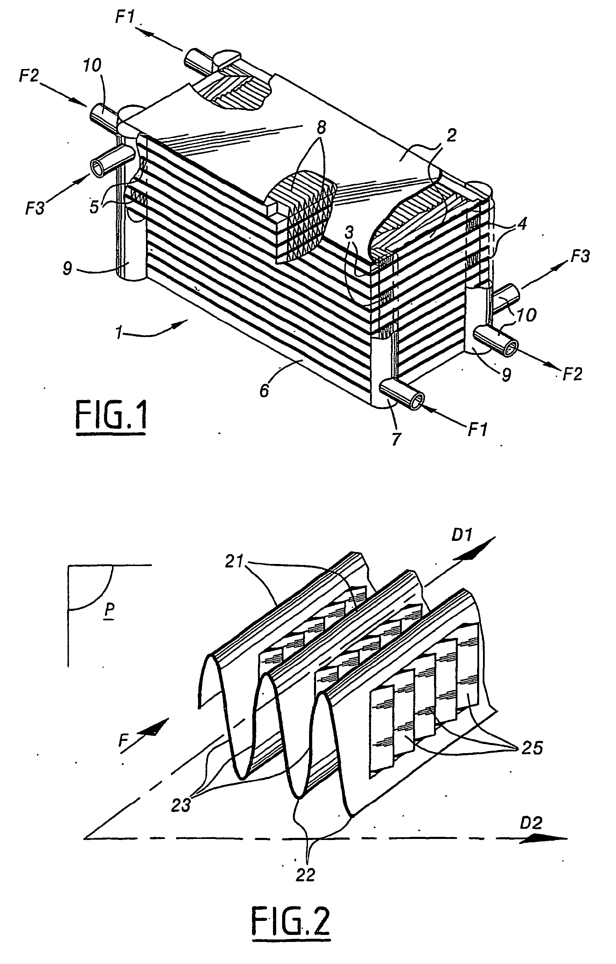

La Figure 1 des dessins annexes représente en perspective, avec des arrachements partiels, un exemple d'un tel échangeur de chaleur, de structure classique, auquel s'applique l'invention.

L'échangeur de chaleur 1 représenté est constitué d'un empilement de plaques rectangulaires parallèles 2 toutes identiques, qui définissent entre elles une pluralité de passages pour des fluides à mettre en relation d'échange thermique indirect. Dans l'exemple représente, ces passages sont successivement et cycliquement des passages 3 pour un premier fluide, 4 pour un deuxième fluide et 5 pour un troisième fluide.

Chaque passage 3 à 5 est bordé de barres de fermeture 6 qui le délimitent en laissant libres des fenêtres 7 d'entrée/sortie du fluide correspondant. Dans chaque passage sont disposées des ondes-entretoises ou ailettes ondulées 8 servant à la fois d'ailettes thermiques, d'entretoises entre les plaques, notamment lors du brasage et pour éviter toute déformation des plaques lors de la mise en oeuvre de fluides sous pression, et de guidage des écoulements de fluides.

L'empilement des plaques, des barres de fermeture et des ondes-entretoises est généralement réalisé en aluminium ou en alliage d'aluminium et est assemblé en une seule opération par brasage au four.

Des boîtes 9 d'entrée/sortie de fluides, de forme générale semi-cylindrique, sont ensuite soudées sur le corps d'échangeur ainsi réalisé de façon à coiffer les rangées de fenêtres, d'entrée/sortie correspondantes, et elles sont reliées à des conduites 10 d'amenée et d'évacuation des fluides.

Ces échangeurs posent des problèmes spécifiques dus aux forts débits de fluides à traiter et à l'importance des échanges thermiques nécessaires pour réaliser des écarts de température très élevés entre l'entrée et la sortie de l'échangeur :

- pour réaliser l'échange thermique souhaité et pour traiter d'importants débits de fluide, les échangeurs de type cryogénique, tels que décrits en référence à la Figure 1, présentent des dimensions importantes (longueur de plusieurs mètres) et peuvent être constituée de plusieurs corps unitaires tels que décrit précédemment. Les volumes de tels échangeurs sont donc très élevés;
- les forts débits et de grandes longueurs d'échange entraînent des pertes de charge qui se traduisent en haute consommation énergétique au compresseur principal.

Pour réduire le volume de l'échangeur et/ou la consommation énergétique de l'installation, les performances de l'onde d'échange mise en place dans l'échangeur en termes de pertes de charge sont fondamentales.

Dans ce domaine industriel, on utilise de façon classique des ondes-entretoises 8 de type serrated, droites ou droites perforées.

L'onde serrated, la plus largement utilisée, est d'une grande efficacité thermique mais présente des performances en termes de pertes de charge quelque peu pénalisantes.

On connaît par ailleurs des échangeurs de chaleur différents utilisés dans l'industrie automobile pour réaliser des évaporateurs de circuit de climatisation. Ces échangeurs, dont les ondes sont réalisées généralement à partir de feuilles d'aluminium, se distinguent des échangeurs cryogéniques en ce qu'ils sont de petites dimensions, à savoir quelques centimètres (une dizaine maximum), qu'ils sont soumis à peu de contraintes mécaniques puisqu'ils travaillent à des pressions proches de la pression atmosphérique, et qu'ils ne sont pas assujettis aux mêmes impératifs en termes de pertes de charge.

Les ondes des échangeurs de type utilisé dans l'industrie automobile sont fabriquées au moyen de molettes, avec des canaux de section triangulaire ou sinusoïdale et des densités limitées, à partir d'un feuillard de faible épaisseur (environ 0.1 mm).

On utilise notamment dans le domaine automobile des ondes entretoises dites « ondes à persiennes », telles que représentées sur la Figure 2.

Une onde à persiennes possède une direction générale principale d'ondulation D1 définissant un sens général F d'écoulement du fluide. Dans le plan P orthogonal à la direction générale principale d'ondulation D1, l'onde présente une section de forme sinusoïdale étirée en hauteur. La sinusoïde ainsi définie s'étend suivant une direction D2 perpendiculaire à la direction D1, ces deux directions étant supposées, pour la commodité de la description, horizontales comme cela a été représenté sur la Figure 2.

L'onde présente des sommets d'onde 21, définis par les sommets de la sinusoïde, et des bases d'onde 22, définies par les bases de la sinusoïde. Les sommets 21 et les bases 22 relient alternativement des jambes d'onde 23 présentant chacune un plan vertical moyen perpendiculaire à la direction D2.

Deux jambes d'onde consécutives 23 définissent entre elles un passage de fluide vis-à-vis du sens général F d'écoulement.

Dans chaque jambe d'onde 23, sont découpés une série de volets 25, parallèles entre eux, et inclinée par rapport au plan vertical moyen et à la direction générale principale d'ondulation D1. Les volets 25 définissent des ouvertures constituant des passages secondaires du fluide, dans une direction principalement transversale, d'un canal à un canal adjacent. Ces volets s'étendent sur une partie seulement de la hauteur de la jambe d'onde.

Les ondes à persiennes, triangulaires ou sinusoïdales du type décrit ci-dessus, n'ont, jusqu'à présent, pas été utilisées dans les échangeurs de chaleur à plaques industrielles pour les raisons suivantes.

Premièrement, les sommets et bases d'onde, que l'onde soit triangulaire ou sinusoïdale, offrent seulement des lignes de brasage sur les plaques séparatrices, donc de très faibles surfaces de liaison mécanique aux plaques. De telles géométries d'ailettes ne conviennent donc pas aux pressions élevées des échangeurs industriels, qui sont de façon classique comprises entre 6 et 10 bars, et atteignent parfois 80 bars.

Deuxièmement, la forme des ondes à persiennes utilisées dans l'industrie automobile est étroitement liée au procédé de fabrication à la molette, lequel est particulièrement adapté à de hautes cadences de fabrication. D'autres formes d'onde ne peuvent être obtenues que très difficilement avec un procédé de fabrication à la molette. Avec un tel procédé de fabrication, le découpage des volets ne peut se faire correctement que sur une partie de la hauteur des jambes d'onde. Ce découpage n'est pas suffisant pour le niveau de performance d'échange recherché dans les échangeurs industriels.

Troisièmement, le procédé de fabrication usuel des ondes à persiennes, c'est-à-dire à la molette, peut difficilement être adapté à des épaisseurs de feuillard importantes, de l'ordre de 0,2 à 0,5 mm, telles qu'utilisées dans les échangeurs industriels pour tenir les contraintes mécaniques sur les ailettes.

L'objet de l'invention est donc de proposer une ailette de type à persiennes, dont les performances en termes de pertes de charge sont supérieures notamment à l'onde sérrated, et qui puisse être utilisée dans des échangeurs industriels, notamment des échangeurs de chaleur à plaques et ailettes d'une unité de séparation d'air ou de mélanges $H_2$/CO par distillation cryogénique, que ce soit dans la ligne d'échange principale ou dans un vaporiseur/condenseur.

A cet effet, l'invention a pour objet une ailette selon la revendication 1.

Ainsi, l'ailette offre une surface de brasage permettant son utilisation dans des échangeurs du type cité précédemment.

Suivant d'autres caractéristiques de l'invention, prises seules ou suivant toutes les combinaisons techniquement envisageables :

- chaque volet est découpé suivant la direction du segment rectiligne défini par la jambe d'onde, sensiblement sur toute la longueur dudit segment ; et
- l'ailette présente une épaisseur de paroi sensiblement uniforme, et comprise entre 0,2 et 0,5 mm.

Une difficulté importante dans la conception des ailettes ondulées réside dans l'obtention d'un compromis optimal entre les performances en termes de pertes de charge et celles d'efficacité thermique de l'onde. En effet, on recherche, lorsque l'on réalise de telles ailettes, des effets de turbulence et de remélange du fluide à l'intérieur des canaux de passage, de façon à augmenter l'écart de température local entre le fluide et la paroi, et ainsi favoriser l'échange thermique. Cependant, il est essentiel de maîtriser ces effets de turbulence et de remélange du fluide, afin de limiter les pertes de charge générées par l'ailette. Il est essentiel, notamment dans des installations industrielles, par exemple des installations de séparation d'air ou de mélanges $H_2$/CO par distillation cryogénique, de limiter la consommation d'énergie nécessaire à la mise en mouvement du fluide dans les échangeurs de chaleur.

Un autre but de l'invention est de proposer une géométrie d'ailettes à persiennes du type décrit ci-dessus, permettant de limiter les pertes de charge induites dans l'ailette et d'obtenir une grande qualité d'échange thermique, dans une mesure permettant d'utiliser ce type d'ailettes dans des échangeurs cryogéniques industriels.

Suivant encore une autre caractéristique de l'ailette suivant l'invention

la longueur des volets vérifie la relation suivante :

$$l_s \geq 1,1 \cdot p \, ;$$

L'invention concerne en outre un procédé de fabrication en continu, selon la revendication 6.

Suivant le procédé de l'invention, on fait défiler le produit pas-à-pas dans un outil de presse comprenant au moins une partie mobile d'outil à mouvement alternatif, ladite partie d'outil réalisant avec le même mouvement l'ondulation de l'ailette et le découpage des volets.

Suivant d'autres caractéristiques du procédé :

- on maintient en position le produit plat en amont de ladite partie mobile d'outil au moyen d'un dispositif de maintien, lorsque ladite partie mobile d'outil est active, et on libère le produit plat pour permettre son défilement et l'extraction de l'onde formée hors de l'outil, lorsque la partie mobile d'outil est inactive,
- on pilote et on synchronise le dispositif de maintien et la partie mobile d'outil par des moyens de contrôle et de commande.

Un exemple de réalisation de l'invention va maintenant être décrit en référence aux Figures 3 à 8 des dessins annexée, dans lesquels :

- la Figure 3 est une vue en perspective d'une partie d'ailette ondulée suivant l'invention ;
- la Figure 4 est une vue en coupe agrandie dans le plan V vertical représenté sur la Figure 3 ;
- la Figure 5 est une vue schématique agrandie de section, dans le plan horizontal H, de l'onde représentée à la Figure 3, seules trois jambes d'onde étant représentées ;

- la Figure 6 est une représentation analogue partielle, à plus grande échelle ;
- la Figure 7 est une représentation schématique d'un dispositif de fabrication d'une ailette ondulée à persiennes suivant l'invention ; et
- la Figure 8 rassemble des vues de dessus respectivement d'un poinçon, d'un guide, et des entretoises de sortie, centrale et d'entrée utilisées dans le dispositif de la Figure 7.

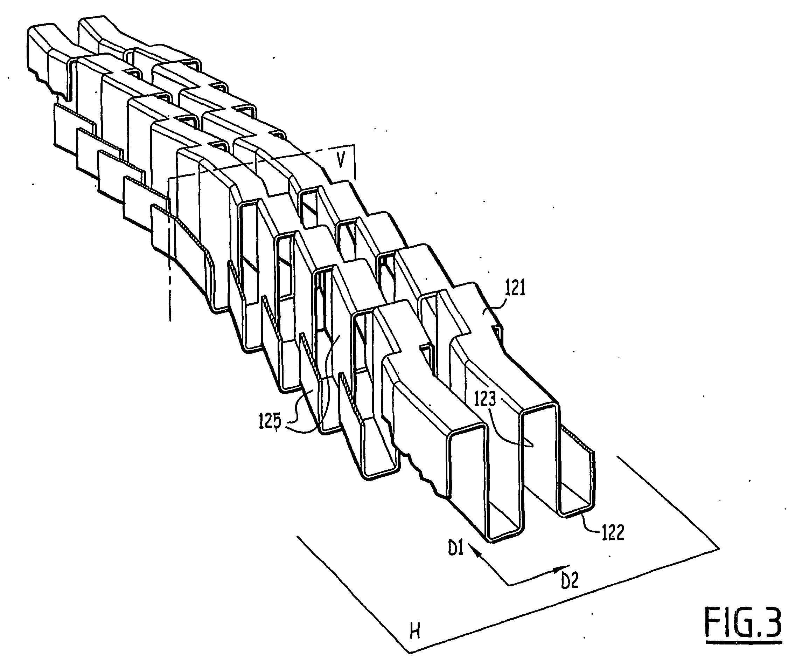

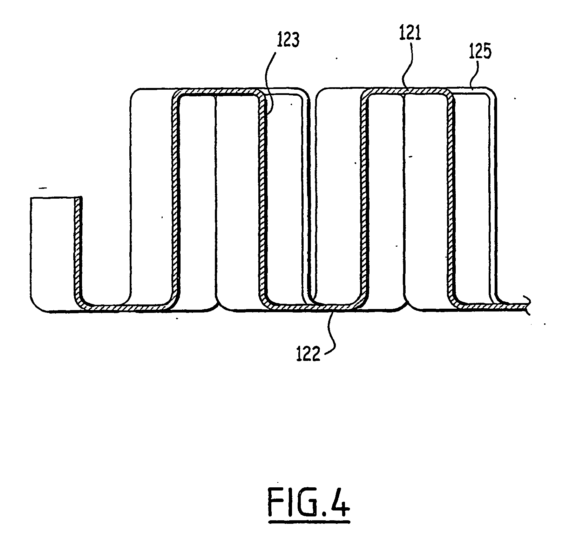

Sur la Figure 3, on a représenté une onde à persiennes conforme à l'invention, laquelle possède une direction générale principale d'ondulation D1, et une section transversale (Figure 4) en créneaux, les créneaux ainsi définis s'étendant suivant une direction D2 perpendiculaire à la direction D1. Là encore, pour la commodité de la description, ces deux directions sont supposées horizontales.

Par « créneaux », on entend une succession, en alternance, de segments horizontaux et verticaux, les segments horizontaux étant alignés.

L'ailette présente des sommets d'onde 121, définis par les sommets des créneaux, plate et horizontaux. Elle présente des bases d'onde 122, définies par les bases des créneaux, également plats et horizontaux. Les soumets 121 et les bases 122 relient alternativement des jambes d'onde 123 planes et verticales, dont le plan moyen s'étend perpendiculairement à la direction D2.

Dans les jambes d'onde 123, sont découpés une série de volets 125, parallèles entre eux, et inclinés par rapport au plan vertical et à la direction générale d'ondulation D1. Lee volets 125 définissent des ouvertures constituant des passages secondaires du fluide, dans une direction principalement transversale, d'un canal à un canal adjacent.

Comme cela apparaît sur les Figures 3 et 4, les volets 125 d'une jambe d'onde sont découpés sur toute la hauteur (ou quasiment sur toute la hauteur) du segment rectiligne défini par le plan moyen de la jambe d'onde pris en section transversale.

Cette disposition permet, par rapport aux ondes à persiennes dont les volets sont découpés sur seulement une partie de la hauteur, d'accroître l'effet de remélange du fluide circulant dans l'ailette.

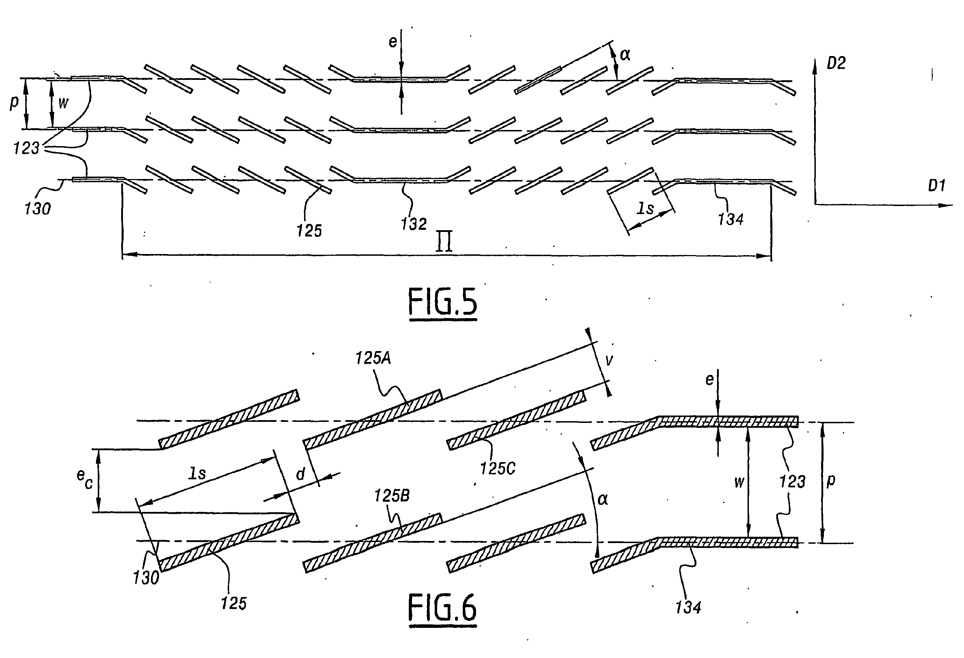

En référence à la Figure 5, on va maintenant définir les grandeurs qui caractérisent l'onde à persiennes du type décrit ci-dessus, et qui influent sur ses performances en termes de pertes de charges et en terme d'efficacité thermique.

La Figure 5 est une vue schématique en coupe, dans le plan horizontal (H) de symétrie, de l'onde représentée à la Figure 3, seules trois jambes d'onde étant représentées ici.

Les lignes désignées par la référence 130 représentent le plan vertical d'une jambe d'onde 123, plan par rapport auquel est défini l'angle d'inclinaison $\alpha$ des volets 125.

Le pas de l'onde correspondant à l'écartement de deux plans 130 consécutifs, correspondant à deux jambes d'onde consécutives 23, est désigné par la référence $p$.

L'épaisseur $e$ des parois de l'onde est supposée constante. De ce fait, la largeur du canal défini par deux jambes d'onde 123 consécutives est égale à $w = p - e$.

Dans le type d'application visée par l'invention, l'épaisseur $e$ est comprise entre 0,2 et 0,5 mm, essentiellement pour réaliser un compromis entre la tenue mécanique et la densité de l'ailette.

Le long de l'onde, dans la direction d'ondulation D1, les volets 125 sont configurés suivant un motif qui se reproduit avec une périodicité géométrique caractérisée par une période II. Ce motif comporte ici deux groupes de six volets inclinés respectivement suivant un angle $\alpha$ positif et un angle $\alpha$ négatif, avec entre ces deux groupes une plage plane 132, 134 orientée Suivant la direction D1. Deux jambes d'onde 123 consécutives transversalement sont identiques, donc constituées d'une même séquence de motifs reproduite périodiquement sans décalage relatif.

Sur les plages planes 132, 134, les jambes d'onde correspondantes 123 sont dépourvues d'ouverture.

On se réfère à présent plus particulièrement à la Figure 6.

Un aspect de l'invention repose sur la constatation que certains des paramètres géométriques d'une onde à persiennes décrits plus haut, influent de façon importante sur les performances thermiques et de perte de charge de l'ailette.

On a constaté que ces performances sont accrues lorsque la longueur $l_s$ des volets 25 est supérieure au pas $p$ ou encore à l'écartement transversal moyen $w$ augmenté de l'épaisseur $e$, c'est-à-dire lorsque la longueur $l_s$ vérifie la relation suivante :

$$l_s \geq p \text{ ou encore } l_s \geq w + e.$$

De préférence, on choisira une longueur 1, de volet telle que

$$l_s \geq 1{,}1 \cdot p,$$

et de préférence encore :

$$l_s \geq 1{,}2 \cdot p.$$

on peut réaliser ainsi des échangeurs cryogéniques équipés d'ondes d'échange de densités variables répondant aux différente modes de fonctionnement des passages d'un même échangeur, notamment présentant des pressions différentes suivant les passages, ces pressions pouvant atteindre plusieurs dizaines de bars. On peut par exemple réaliser des ailettes de haute densité pour des faibles longueurs de volet, ou alternativement, des ailettes de densité plus faible avec des longueurs de volet plus importantes.

Suivant un autre aspect de l'invention, des performances optimales d'ailette sont obtenues lorsque l'angle d'inclinaison des volets $\alpha$ est compris strictement entre une valeur minimale $\alpha_{min}$ et une valeur maximale $\alpha_{max}$ positives, définies par les relations suivantes :

$$\sin \alpha_{min} = e/l_s$$

et

$$tg\,\alpha_{max} = \frac{p}{l_s}$$

La première de ces conditions $|\alpha| > \alpha_{min}$ assure une ouverture $\underline{v}$ strictement positive entre deux volets 125A, 125C consécutifs sur une même jambe d'onde, à savoir qu'elle définit une orientation des volets excluant un contact entre le bord de fuite du premier volet 125A avec le bord d'attaque du deuxième volet 125C.

La valeur maximale $\alpha_{max}$ de l'angle $\alpha$ correspond, quant à elle, à l'angle d'alignement de deux volets 125B, 125C consécutif a de deux jambes d'onde consécutives, et la deuxième condition $|\alpha| < \alpha_{max}$ assure une ouverture telle que les passages dans des jambes d'onde consécutives ne sont pas alignes, et génèrent ainsi de la turbulence.

On centre certaines ailettes au milieu du passage défini par deux ailettes correspondantes appartenant à une jambe d'onde consécutive, en choisissant un angle d'inclinaison des volets a sensiblement égal, en valeur absolue, à un angle $\alpha_1$ défini par la relation

$$tg\,\alpha_1 = \frac{p}{2\,l_s}$$

Afin d'assurer une circulation optimale du fluide dans les canaux secondaires formas par les volets 125, on choisit un angle d'inclinaison $\alpha$ répondant à la condition

$$p \geq l_s.\sin|\alpha| + e.\cos|\alpha|.$$

De plue, cette condition permet d'assurer une fabrication aisée de l'onde et un écartement $\underline{e}_c$ entre deux rangées de volets 125 strictement positif.

L'invention vise également un échangeur de chaleur cryogénique à plaques, du type comprenant un empilement de plaques parallèles 2 qui définissent une pluralité de passages 3 à 5 de circulation de fluides de forme générale plate, des barres de fermeture 6 qui délimitent ces passages, et des ailettes ondulées 8 disposées dans les passages, caractérisé en ce qu'au moins une partie des ailettes ondulées 8 sont du type décrit précédemment.

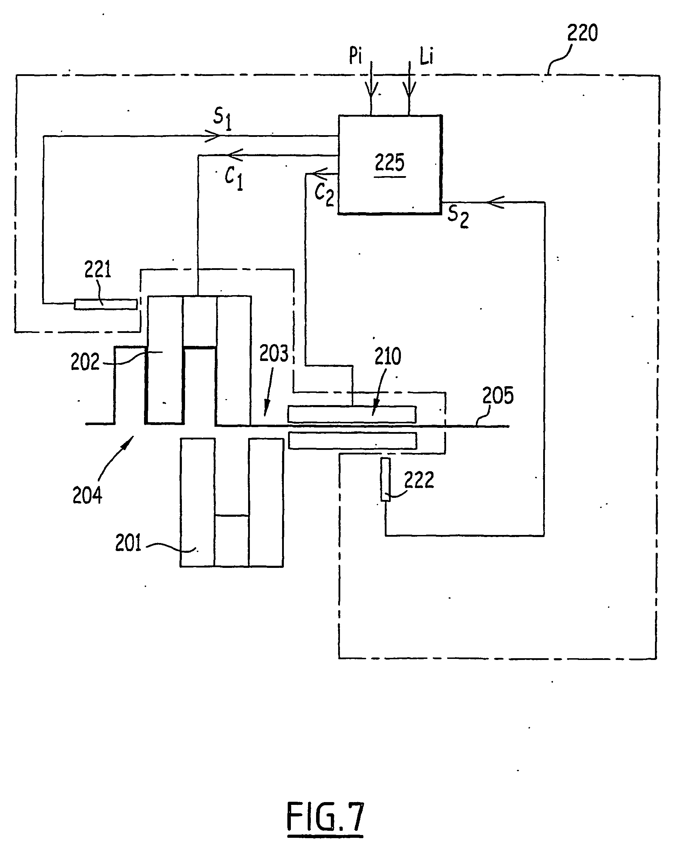

En référence à la Figure 7, on va décrire un dispositif ou machine permettant de fabriquer une ailette ondulée à persiennes, notamment une ailette du type décrit en référence aux figures 3 à 6, et notamment une ailette à parois épaisses.

Ce dispositif comprend un outil de presse comportant essentiellement une matrice 201 et un poinçon 202 pouvant être animés d'un mouvement relatif de translation.

Pour la commodité de la description, on supposera la matrice 201 fixe et le poinçon 202 mobile. Le poinçon 202 peut être animé d'un mouvement de translation alternatif supposé vertical. Le poinçon 202 et la matrice 201 ont des formes complémentaires.

L'outil présente une entrée 203 et une sortie 204 par lesquelles transite en continu un produit métallique en feuille à traiter.

Le dispositif possède des moyens non représentés, d'entraînement et de guidage de la feuille métallique 205, qui permettent un déplacement régulier pas-à-pas de la feuille métallique dans l'outil, dans un plan supposé horizontal.

Le poinçon 202, par coopération avec la matrice 201, réalise, par intervalles réguliers, le formage de la feuille métallique alimentant l'outil en continu.

Le dispositif comporte d'autre part des moyens 210 de maintien de la feuille en amont de l'entrée 203, permettant de sélectivement fixer la feuille par rapport à l'outil ou de la libérer pour permettre son défilement.

Les moyens de maintien 210 peuvent par exemple être constituée essentiellement de deux mâchoires de serrage situées de part et d'autre de la surface de la feuille 205.

Le dispositif comporte en outre des moyens de contrôle et de commande 220 aptes à commander le fonctionnement de l'outil, en l'occurrence les mouvements du poinçon 202 et des moyens de maintien 210, en réponse à des paramètres mesurés et/ou préenregistrés.

Les moyens de commande et de contrôle comportent à cet effet un capteur 221 de position du poinçon 202, et un capteur 222 de position ou d'état des moyens de maintien 210.

Les moyens de contrôle et de commande 220 comportent en outre un calculateur 225 relié aux capteurs de position 221, 222, de façon à recevoir leurs signaux de détection respectifs $S_1$, $S_2$.

Le calculateur 225 est par ailleurs adapté pour recevoir d'autres paramètres $P_i$ préenregistrés, ainsi que des lois de commande préprogrammées $L_i$. Le calculateur 225 émet vers le poinçon 202 (c'est-à-dire vers son organe moteur), et vers les moyens de maintien 210, des signaux de commande respectif $C_1$, $C_2$ élaborés à partir des signaux de détection $S_1$, $S_2$, des paramètres préenregistrés extérieurs $P_i$ et des lois de commande $L_i$.

Dans un souci de simplification, la matrice 201 a été supposée fixe, mais elle peut être en réalité mobile, en alternance avec le poinçon 202. Dans ce cas, la matrice 201 est entraînée par un organe moteur recevant également un signal de commande du calculateur 225.

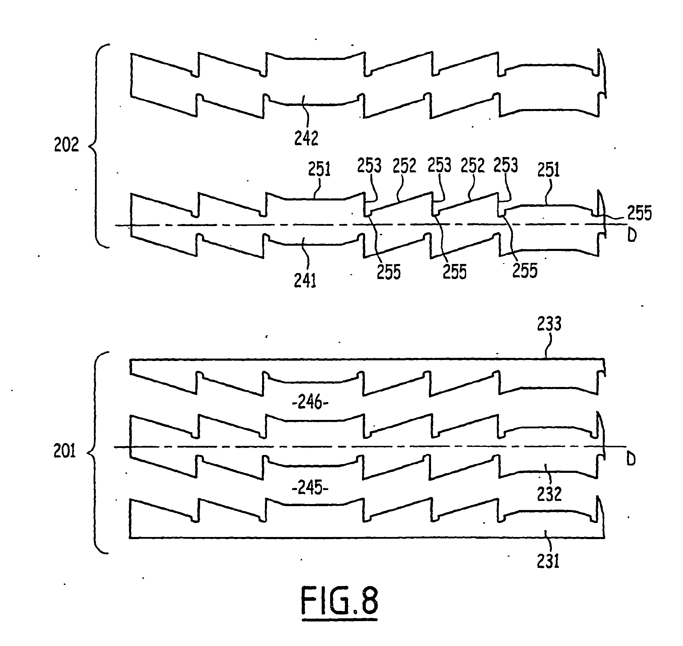

En référence à la Figure 8, on va décrire plus précisément certaine des éléments constitutifs de la matrice (ou partie fixe d'outil) 201 et du poinçon (ou partie mobile d'outil) 202.

La matrice 201 comporte une entretoise d'entrée 231, une entretoise centrale 232, et une entretoise de sortie 233, tandis que le poinçon 202 comprend une première partie de poinçon 241 (ou « premier poinçon ») et une deuxième partie de poinçon 242 (ou « deuxième poinçon »).

Chacun de ces éléments 231, 232, 233, 241, 242 est allongé suivant une direction générale D horizontale.

L'entretoise d'entrée 231 et l'entretoise centrale 232 sont disposées parallèlement de façon à définir entre elles un espacement 245 de forme complémentaire du premier poinçon 241. De même, l'entretoise centrale 232 et l'entretoise de sortie 233 sont disposées parallèlement et espacées de façon à définir entre elles un passage 246 complémentaire du deuxième poinçon 242.

Les mouvements du poinçon 202 par rapport à la matrice 201 tels que définis en référence à la Figure 7, qui sont des mouvements verticaux alternatifs, orthogonaux à la surface de la feuille 205, correspondent à des déplacements solidaires alternatifs des parties de poinçon 241, 242, orthogonalement au plan de la Figure 8.

Le premier pressage de la feuille métallique par le premier poinçon 241 entre les entretoises 231, 232 permet de réaliser une première étape d'ondulation et de découpage des volets, tandis que la deuxième étape de pressage de la partie d'onde ainsi formée, au moyen du deuxième poinçon 241 et des entretoises centrale 232 et de sortie 233, permet de réaliser le formage définitif de l'onde.

Le premier poinçon 241 et le deuxième poinçon 242 sont de formes sensiblement identiques, tandis que les entretoises 231, 232, 233 sont de formes complémentaires, de sorte qu'il sera utile de décrire la forme d'un seul poinçon, par exemple le premier poinçon 241.

Ce premier poinçon 241 est, dans l'exemple représenté, de forme adaptée pour réaliser le formage d'une onde a persiennes en créneaux. Il présente une succession de facettes planes verticales, parmi lesquelles des facettes 251 s'étendant suivant la direction générale longitudinale D du poinçon ces facettes « droites » 251 correspondent aux formes des sections de jambe d'onde dénuées de volets. Le poinçon 241 présente d'autres facettes latérales planes 252 qui sont des facettes inclinées par rapport à cette direction principale D, et qui sont destinées à réaliser de découpage des volets. Entre deux facettes consécutives, que ce soit deux facettes inclinées 252, ou une facette inclinée 252 et une facette « droite » 251, le poinçon présente un décrochement 253 sous la forme d'une face verticale plane, orthogonale à la direction générale D.

Entre un décrochement 253 et une facette 251 ou 252, est formée une gorge verticale 255 permettant un découpage net de volets dans les jambes d'onde.

On va maintenant décrire plus en détail le fonctionnement du dispositif, étant entendu que ce fonctionnement est réitéré un grand nombre de fois à vitesse élevée pendant toute la durée de défilement de la feuille métallique dans l'outil.

Dans le procédé de fabrication d'une ailette ondulée au moyen du dispositif qui vient d'être décrit, on réalise les étapes suivantes, à partir de l'état initial dans lequel le poinçon 202 est en position haute par rapport à la matrice 201, c'est-à-dire en position inactive ou position de point-mort haut (toute autre position du poinçon sera dite « active ») :

- on bloque le défilement de la feuille métallique 205 par les moyens de maintien 210 ;
- on actionne le poinçon 202 en translation verticale vers la matrice 201, en entraînant dans le même mouvement le premier poinçon 241 et le deuxième poinçon 242, de façon à réaliser, dans un même mouvement de poinçon 202, l'ondulation de l'ailette et le découpage des volets ;
- on libère la feuille 205 des moyens de maintien 210 de façon à permettre son défilement au travers de l'outil et l'extraction de l'outil des ondes déjà formées ; et
- on fait avancer la feuille métallique 205 d'un pas avant de réitérer, dans le même ordre, les opérations citées précédemment.

Il faut noter que les paramètres préenregistrés $P_i$ et les lois de commande $L_i$ correspondent à la consigne de géométrie de l'ailette ondulée. Ces lois et paramètres variant en fonction du type d'ondes à réaliser et des performances thermiques de l'ailette ondulée ou des caractéristiques d'écoulement de fluide recherchées.

A chaque instant, le mouvement du poinçon 202 et des moyens de maintien 210 sont synchronisés par le calculateur 225, grâce aux signaux $S_1$ et $S_2$ fournis par les capteurs 221, 222.

Le procédé et le dispositif qui viennent d'être décrits permettent la réalisation en continu d'ailettes ondulées à persiennes, notamment d'ondes en créneaux, à partir de feuilles métalliques d'épaisseur importante.

Ainsi, ces procédé et dispositif permettent de réaliser des ondes à persiennes utilisables dans les échangeurs industriels, avec des cadences de fabrication élevées, comparables aux cadences de fabrication des ailettes à persiennes qui sont utilisées dans l'industrie automobile.

**Revendications**

1. Ailette ondulée pour échangeur de chaleur à plaques et ailettes, du type à persiennes définissant une direction générale principale d'ondulation (D1), comprenant un ensemble de jambes d'onde (123) reliées alternativement par un sommet d'onde (121) et par une base d'onde (122), les jambes d'onde (123) étant pourvues de volets (125) découpés dans les dites jambes d'onde (123) et inclinés d'un angle ($\alpha$) par rapport à la direction principale d'ondulation (D1), les jambes d'onde (123), les sommets (121) et les bases (122) d'onde formant, en section transversale par rapport à la direction principale d'ondulation (D1), des segments rectilignes, les sommets (121) et les bases (122) étant parallèles entre eux, les jambes d'onde (123) étant toutes parallèles entre elles et perpendiculaires aux bases (122) d'onde, de sorte que l'ailette présente une ondulation en créneaux, les jambes d'onde (123) présentant une épaisseur ($\underline{e}$), un écartement transversal moyen ($\underline{w}$) par rapport à la direction générale principale d'ondulation (D1), qui définit la largeur d'un canal de passage et un pas ($\underline{p}$), **caractérisé en ce que** les volets (125) présentent une longueur ($\underline{l}_s$), supérieure au pas ($\underline{p}$) et **en ce que** l'angle d'inclinaison ($\alpha$) des volets (25) est sensiblement égal, en valeur absolue, à un angle ($\alpha_2$) défini par la relation :

$$\text{Tg } \alpha_1 = \frac{p}{2 \, l_s}$$

.

2. Ailette ondulée suivant la revendication 1, **caractérisée en ce** chaque volet (12) est découpé suivant la direction du segment rectiligne défini par la jambe d'onde (123), sensiblement sur toute la longueur dudit segment.

3. Ailette ondulée suivant l'une quelconque des revendications 1 à 2, **caractérisée en ce que** l'ailette présente une épaisseur de paroi ($\underline{e}$) sensiblement uniforme, et comprise entre 0,2 et 0,5 mm.

4. Ailette ondulée suivant la revendication, **caractérisée un ce que** la longueur ($\underline{l}_s$) des volets vérifie la relation suivante :

$$\underline{l}_s \geq 1,1 \cdot \underline{p}.$$

.

5. Echangeur de chaleur à plaques et ailettes d'une unité de séparation d'air ou de mélanges $H_2$/CO par distillation cryogénique, notamment échangeur d'une ligne d'échange principale ou d'un vaporiseur/condenseur, du type comprenant un empilement de plaques parallèles (2) qui définissent une pluralité de passages (3 à 5) de circulation de fluides de forme générale plate, des barres de fermeture (6) qui délimitent ces passages, et des ailettes ondulées (8) disposées dans les passages, **caractérisé en ce qu'**au moins une partie des ailettes ondulées (8) sont conformes à l'une quelconque des revendications 1 à 4.

6. Procédé de fabrication en continu, à partir d'un produit plat en feuille, d'une ailette ondulée à persiennes pour échangeur de chaleur à plaques selon une des revendications 1 à 4, du type comprenant des volets (25 ; 125) découpés dans des jambes d'onde (23 ; 123) dans lequel on fait défiler le produit (205) pas-à-pas dans un outil de presse (201, 202) comprenant au moins une partie mobile d'outil (201) à mouvement alternatif, ladite partie d'outil (201) réalisant avec le même mouvement, l'ondulation de l'ailette et le découpage des volets.

7. Procédé de fabrication suivant la revendication 6, **caractérisé en ce qu'**on maintient en position le produit plat (205) en amont de ladite partie mobile d'outil (201) au moyen d'un dispositif de maintien (210), lorsque ladite partie mobile d'outil (201) est active, et on libère le produit plat (205) pour permettre son défilement et l'extraction de l'onde formée hors de l'outil, lorsque la partie mobile d'outil (201) est inactive.

8. Procédé de fabrication suivant la revendication 7, **caractérisé en ce qu'**on pilote et on synchronise le dispositif de maintien (210) et la partie mobile d'outil (201) par des moyens (220) de contrôle et de commande.

**Claims**

1. Corrugated fin for a plate-and-fin heat exchanger, of the type with louvres defining an overall main direction of corrugation (D1), comprising a set of corrugation legs (123) alternately connected by a corrugation crest (121) and by a corrugation trough (122), the corrugation legs (123) being provided with flaps (125) cut from said corrugation legs (123) and in-

clined at an angle ($\alpha$) with respect to the main direction of corrugation (D1), the corrugation legs (123), the corrugation crests (121) and the corrugation troughs (122) forming, in cross section with respect to the main direction of corrugation (D1), straight segments, the crests (121) and the troughs (122) being mutually parallel, the corrugation legs (123) being all mutually parallel and perpendicular to the corrugation troughs (122), so that the fin has a square wave corrugation, the corrugation legs (123) having a thickness ($\underline{e}$), a mean transverse separation ($\underline{w}$) with respect to the overall main direction of corrugation (D1), which defines the width of a passage channel and a spacing ($\underline{p}$), **characterized in that** the flaps (125) have a length ($\underline{l}_s$) greater than the spacing ($\underline{p}$) and **in that** the angle of inclination ($\alpha$) of the flaps (25) is substantially equal, in terms of absolute value, to an angle ($\alpha_1$) defined by the equation:

$$\tan\alpha_1 = \frac{p}{2l_s}$$

2. Corrugated fin according to Claim 1, **characterized in that** each flap (12) is cut along the direction of the straight segment defined by the corrugation leg (123) over substantially the entire length of said segment.

3. Corrugated fin according to either of Claims 1 and 2, **characterized in that** the fin has a substantially uniform wall thickness ($\underline{e}$) of between 0.2 and 0.5 mm.

4. The corrugated fin according to Claim 1, **characterized in that** the length ($\underline{l}_s$) of the flaps satisfies the following relationship:

$$\underline{l}_s \geq 1.1\underline{p}.$$

5. Plate-and-fin heat exchanger of a unit for separating air or $H_2$/CO mixtures by cryogenic distillation, particularly an exchanger of a main heat exchange line or a reboiler/condenser, of the type comprising a stack of parallel plates (2) which define a plurality of fluid-circulation passages (3 to 5) of flat overall shape, closure bars (6) delimiting these passages, and corrugated fins (8) arranged in the passages, **characterized in that** at least some of the corrugated fins (8) are according to any one of Claims 1 to 4.

6. A method for the continuous manufacture, from a flat product in sheet form, of a louvered corrugated fin for a plate heat exchanger according to one of Claims 1 to 4, of the type comprising flaps (25; 125) cut from corrugation legs (23; 123), in which the product (205) is passed step by step through a press tool (201, 202) comprising at least a moving tool part (201) with a reciprocating movement, said tool part (201) in the one same movement corrugating the fin and cutting the flaps.

7. Manufacturing method according to Claim 6, **characterized in that** the flat product (205) is held in position upstream of said moving tool part (201) by means of a holding device (210) when said moving tool part (201) is active, and the flat product (205) is released to continue its journey and to extract the formed corrugation from the tool when the moving tool part (201) is inactive.

8. Manufacturing method according to Claim 7, **characterized in that** the holding device (210) and the moving tool part (201) are driven and synchronized by command and control means (220).

**Patentansprüche**

1. Gewellte Rippe für einen Wärmetauscher mit Platten und Rippen, die lamellenartig eine allgemeine Hauptwellrichtung (D1) definieren, umfassend eine Anordnung von Wellenschenkeln (123), die abwechselnd mit einem Wellenscheitelpunkt (121) und einem Wellenbasispunkt (122) verbunden sind, wobei die Wellenschenkel (123) mit Klappen (125) versehen sind, die in die Wellenschenkel (123) eingeschnitten und um einen Winkel ($\alpha$) bezüglich der Hauptwellrichtung (D1) geneigt sind, wobei die Wellenschenkel (123), die Scheitelpunkte (121) und die Basispunkte (122) der Welle im Querschnitt bezüglich der Hauptwellrichtung (D1) rechtwinklige Segmente bilden, wobei die Scheitelpunkte (121) und die Basispunkte (122) zueinander parallel sind, und die Wellenschenkel (123) zueinander alle parallel und rechtwinklig zu den Basispunkten (122) der Welle sind, so dass die Rippe eine zinnenartige Wellung aufweist, und die Wellenschenkel (123) eine Dicke ($\underline{e}$), einen mittleren Querabstand ($\underline{w}$) bezüglich der Hauptwellrichtung (D1) aufweisen, der die Breite eines Durchlasskanals und einen Schritt ($\underline{p}$) definiert, **dadurch gekennzeichnet, dass** die Klappen (125) eine Länge ($\underline{l}_n$) aufweisen, die größer als der Schritt ($\underline{p}$) ist, und dass der Neigungswinkel ($\alpha$) der Klappen (25) absolut im Wesentlichen gleich einem durch die Gleichung

$$\text{Tg}\alpha_1 = \frac{p}{2ls}$$

definierten Winkel ($\alpha_2$) ist.

**2.** Gewellte Rippe nach Anspruch 1, **dadurch gekennzeichnet, dass** jede Klappe (12) der Richtung des rechtwinkligen Segments folgend eingeschnitten ist, welches durch den Wellenschenkel (123) definiert wird, im Wesentlichen entlang der Gesamtlänge des Segments.

**3.** Gewellte Rippe nach einem der vorhergehenden Ansprüche 1 oder 2, **dadurch gekennzeichnet, dass** die Rippe eine im Wesentlichen gleichmäßige Wanddicke (e) zwischen 0,2 und 0,5 mm aufweist.

**4.** Gewellte Rippe nach Anspruch 1, **dadurch gekennzeichnet, dass** die Länge ($l_s$) der Klappen die folgende Gleichung erfüllt:

$$\underline{l}_s > 1{,}1 \cdot p.$$

**5.** Wärmetauscher mit Platten und Rippen einer Einheit zum Trennen von Luft oder von Mischungen von $H_2/CO$ zur kälteerzeugenden Destillation, insbesondere ein Tauscher mit einer Haupttauschleitung oder einem Verdampfer/Kondensator, der Art, die einen Stapel paralleler Platten (2), die eine Vielzahl von Fluidzirkulationsdurchlässen (3 bis 5) allgemein flacher Form definieren, diese Durchlässe begrenzende Schlussstangen (6) und in den Durchlässen angeordnete gewellte Rippen (8) umfasst, **dadurch gekennzeichnet, dass** mindestens ein Teil der gewellten Rippen (8) einem der Ansprüche 1 bis 4 entsprechen.

**6.** Herstellungsverfahren, das von einem flachen bogenförmigen Produkt ausgeht und fortlaufend ist, zum Herstellen einer gewellten Rippe mit Lamellen zum Austauschen von Wärme mit Platten, gemäß einem der Ansprüche 1 bis 4, der Art, die Klappen (25; 125) umfasst, die in den Wellenschenkeln (23; 123) eingeschnitten sind, wobei das Produkt (205) schrittweise in Wechselrichtung durch ein Presswerkzeug (201, 202) durchgeleitet wird, welches mindestens einen in Wechselrichtung beweglichen Werkzeugteil (201) umfasst, wobei der Werkzeugteil (201) mit derselben Bewegung die Wellung der Rippe und das Einschneiden der Kappen erzeugt.

**7.** Herstellungsverfahren nach Anspruch 6, **dadurch gekennzeichnet, dass** das flache Produkt (205) in der Höhe des beweglichen Teils des Werkzeugs (201) mittels einer Haltevorrichtung (210) in Position gehalten wird, wenn der bewegliche Teil des Werkzeugs (201) aktiv ist, und das flache Produkt (205) freigegeben wird, um seine Durchleitung und das Herausziehen der gebildeten Welle aus dem Werkzeug zu ermöglichen, wenn der bewegliche Teil des Werkzeugs (201) nicht aktiv ist.

**8.** Herstellungsverfahren nach Anspruch 7, **dadurch gekennzeichnet, dass** die Haltevorrichtung (210) und der bewegliche Teil des Werkzeugs (201) zu Steuer- und Befehlsmitteln (220) angeordnet und synchronisiert werden.

## FIG.1

## FIG.2

FIG.3

FIG.4

**FIG.5**

**FIG.6**

14

FIG.7

## FIG.8